Europäisches Patentamt

European Patent Office

Office européen des brevets

(11) Veröffentlichungsnummer : **0 220 429**
B1

## (12) EUROPÄISCHE PATENTSCHRIFT

(45) Veröffentlichungstag der Patentschrift :
21.12.88

(21) Anmeldenummer : 86112080.6

(22) Anmeldetag : 01.09.86

(51) Int. Cl.⁴ : **B 60 R 13/06**, E 04 F 21/00

(54) Vorrichtung zum Einlegen von Dichtungsprofilen.

(30) Priorität : 30.09.85 DE 3534854

(43) Veröffentlichungstag der Anmeldung :
06.05.87 Patentblatt 87/19

(45) Bekanntmachung des Hinweises auf die Patenterteilung : 21.12.88 Patentblatt 88/51

(84) Benannte Vertragsstaaten :
DE FR IT

(56) Entgegenhaltungen :
DE-A- 2 707 332
FR-A- 2 286 029
US-A- 2 924 007
US-A- 4 342 535

(73) Patentinhaber : Siemens Aktiengesellschaft Berlin
und München
Wittelsbacherplatz 2
D-8000 München 2 (DE)

(72) Erfinder : Burger, Rudolf
Sipplinger Strasse 12
D-8000 München 60 (DE)
Erfinder : Hartmann, Gunter, Dipl.-Ing.
Hohenwaldeckstrasse 2
D-8000 München 90 (DE)
Erfinder : Höh, Dietrich, Dipl.-Ing.
Dukatenweg 16
D-8000 München 82 (DE)
Erfinder : Kloke, Wolfgang
Weichingerstrasse 15
D-8201 Ostermünchen (DE)
Erfinder : Pössinger, Josef
Ammergauer Strasse 32
D-8107 Ettal (DE)

## Beschreibung

Die Erfindung betrifft eine Vorrichtung zum Einlegen von Dichtungsprofilen mit einem programmierbaren Handhabungsgerät, insbesondere mit einem Industrieroboter.

Das Einlegen von Dichtungsprofilen in den zugeordneten Einlegefalz, beispielsweise in den Behälterfalz eines Geschirrspülerbehälters oder in den Türfalz einer Kraftfahrzeugtür, wird bisher so gelöst, daß die mit dieser Arbeit betraute Person ein abgelängtes Dichtungsprofil ergreift, den Anfang in den Einlegefalz eindrückt, und dann kontinuierlich manuell mit einem Andrückwerkzeug das Dichtungsprofil eindrückt, wobei mit der anderen Hand das Dichtungsprofil längs des Einlegefalzes vorgeführt wird (z. B. DE-A-2 707 332). Versuche das Einlegen von Dichtungsprofilen zu automatisieren (z. B. US-A-2 984 007) und mit einem Industrieroboter vorzunehmen führten bislang zu keinen befriedigenden Ergebnissen. Beim Einlegen der Dichtungsprofile mit einem Industrieroboter traten stets Zugspannungen auf die dazu führten, daß die Dichtungsprofile in Ecken und Kurven wieder aus dem Einlegefalz sprangen.

Der Erfindung liegt die Aufgabe zugrunde, eine Vorrichtung zum Einlegen von Dichtungsprofilen mit einem programmierbaren Handhabungsgerät, insbesondere mit einem Industrieroboter zu schaffen, welches mit geringem Aufwand eine sichere und dauerhafte Verlegung der Dichtungsprofile auch in Eckbereichen und Kurven eines Einlegefalzes ermöglicht.

Diese Aufgabe wird erfindungsgemäß dadurch gelöst, daß das Dichtungsprofil über eine der Profilform angepaßte Längsführung unmittelbar unter eine im Abstand dazu angeordnete Andrückrolle führbar ist, und daß die Andrückrolle derart antreibbar ist, daß beim Einlegen Zugspannungen im Dichtungsprofil zumindest weitgehend kompensiert werden.

Bei der erfindungsgemäßen Vorrichtung übernimmt die Längsführung die Führung des Dichtungsprofils beim Verlegen, während das Eindrücken in den Einlegefalz von der Andrückrolle übernommen wird. Von entscheidender Bedeutung ist dabei, daß durch einen entsprechenden Antrieb der Andrückrolle beim Legen keine oder allenfalls nur geringe Zugspannungen im Dichtungsprofil entstehen und somit ein fester Halt des Dichtungsprofils auch in Ecken und Kurven gewährleistet ist. Durch die Längsführung wird einerseits eine gleichmäßige Zuführung des Dichtungsprofils zur Andrückrolle und andererseits eine flexible Anpassung an Richtungsänderungen des Einlegefalzes ermöglicht. In Kurvenbereichen wird diese Anpassung durch eine steilere Stellung der Längsführung bewirkt, die im Hinblick auf den höheren Außenrand eines Einlegefalzes aus Platzgründen erforderlich ist.

Die Längsführung kann als Gleitführung ausgebildet sein, die mit einem besonders geringen Aufwand hergestellt werden kann. Zur Verringerung der Reibung in der Längsführung und damit zur weiteren Reduzierung der Zugspannungen im Dichtungsprofil kann die Längsführung auch als Rollenführung ausgebildet werden.

Im Bereich der Längsführung kann auch ein in Richtung zur Andrückrolle wirkender Vorschub für das Dichtungsprofil angeordnet werden, wobei dieser Vorschub vorzugsweise durch ein in der Längsführung angeordnetes Reibrad gebildet ist. Diese Maßnahme ist vor allem bei besonders elastischen Dichtungsprofilen zur weiteren Reduzierung der Zugspannungen geeignet.

Gemäß einer weiteren bevorzugten Ausgestaltung der Erfindung ist die Andrückrolle an einem mit dem Träger der Längsführung fest verbundenen Auslegerarm befestigt. Mit einem derartigen Auslegerarm wird eine besonders gute Anpassung an die jeweiligen Platzverhältnisse ermöglicht. Wird dann der der Andrückrolle zugeordnete Antriebsmotor an dem Träger befestigt, so ergibt sich eine noch höhere Flexibilität der Vorrichtung.

Die Andrückrolle kann unmittelbar über einen Rundschnurriemen angetrieben sein, wobei ein derartiger Antrieb einen besonders geringen Aufwand erfordert. Günstiger ist es jedoch, wenn die Andrückrolle über ein parallel dazu angeordnetes Antriebsrad und ein endloses Antriebsglied antriebbar ist. Insbesondere kann dann die Form der Andrückrolle der Profilform des Dichtungsprofils angepaßt werden.

Weiterhin ist es auch besonders vorteilhaft, wenn in der Längsführung eine Klemmeinheit zum Festhalten des Dichtungsprofils angeordnet ist. Nach dem Einfädeln in die Längsrührung kann dann das Dichtungsprofil geklemmt und so lange festgehalten werden, bis der Dichtungsanfang in den Einlegefalz eingelegt ist.

Um das Eindrücken des Dichtungsprofils zu erleichtern kann unterhalb der Längsführung eine Sprühdüse zur Beaufschlagung des Einlegebereichs mit einem Gleitmittel angeordnet werden.

Zur weiteren Vereinfachung des gesamten Einlegevorgangs ist im Abstand parallel zur Andrückrolle eine nicht angetriebene Zusatzrolle zum Eindrücken des Dichtungsendes angeordnet. Auch hier ist es dann wieder zweckmäßig, wenn die Form der Zusatzrolle der Profilform des Dichtungsprofils angepaßt ist.

Ein Ausführungsbeispiel der Erfindung ist in der Zeichnung dargestellt und wird im folgenden näher beschrieben.

Es zeigen

Figur 1 und Figur 2 eine Vorrichtung zum Einlegen von Dichtungsprofilen in der Vorderansicht bzw. in der Seitenansicht mit geschnittener Längsführung,

Figur 3 und Figur 4 eine Ausgestaltung der Längsführung als Gleitführung im Querschnitt bzw. im Längsschnitt,

Figur 5 und Figur 6 eine Ausgestaltung der Längsführung als Rollenführung im Querschnitt bzw. im Längsschnitt,

Figur 7 und Figur 8 eine unmittelbar über einen Rundschnurriemen angetriebene Andrückrolle in der Seitenansicht bzw. im Schnitt,

Figur 9 und Figur 10 eine über ein Antriebsrad und ein endloses Antriebsglied angetriebene Andrückrolle in der Seitenansicht bzw. im Schnitt,

Figur 11 bis Figur 14 verschiedene Formen von Andrückrollen,

Figur 15 bis Figur 18 verschiedene Profilformen von Dichtungsprofilen und

Figur 19 als Beispiel für den Einsatz der Vorrichtung das Einlegen einer Türdichtung in einen Geschirrspülerbehälter.

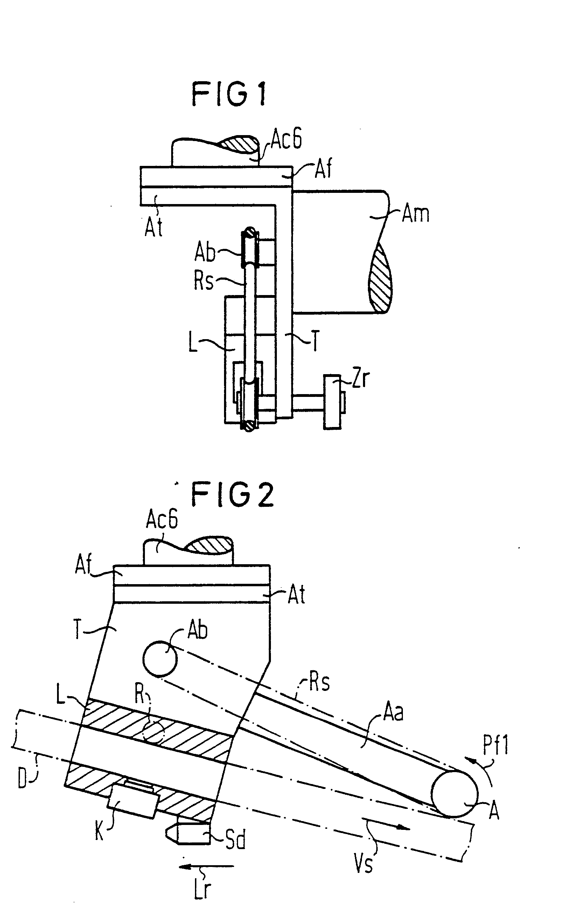

Die Figuren 1 und 2 zeigen in stark vereinfachter schematischer Darstellung eine Vorrichtung zum Einlegen von Dichtungsprofilen in der Voderansicht bzw. in der Seitenansicht. Die Vorrichtung ist mit dem flanschartigen Anschlußteil At eines winkelförmigen Trägers T an den Anschlußflansch Af der sechsten Achse Ac 6 eines sonst nicht weiter dargestellten Industrieroboters angeflanscht. An dem zum Anschlußteil At rechtwinklig verlaufenden Schenkel des Trägers T ist seitlich eine Längsführung L befestigt, in welcher ein in Figur 2 strichpunktiert dargestelltes Dichtungsprofil D geführt ist. Die Längsführung L ist derart ausgerichtet, daß das in ihr geführte Dichtungsprofil D unmittelbar unter eine Andrückrolle A geführt wird, die am vorderen Ende eines mit dem Träger T fest verbundenen Auslegerarms Aa befestigt ist. Die Andrückrolle A wird in der durch einen Pfeil Pf1 aufgezeigten Drehrichtung über einen seitlich am Träger T angebrachten Antriebsmotor Am, dessen Abtriebsrad Ab und einen Rundschnurriemen Rs angetrieben, wobei der Rundschnurriemen Rs in einer in Umfangsrichtung verlaufenden Rille der Andrückrolle A geführt ist.

Im unteren Bereich der Längsführung L ist eine Klemmeinheit K angeordnet, bei welcher es sich beispielsweise um einen Kurzhubzylinder handelt und mit welcher das Dichtungsprofil D in der Längsführung L festgeklemmt werden kann. An der Unterseite der Längsführung L ist ferner eine Sprühdüse Sd befestigt, mit welcher beim Einlegen gesteuert ein Gleitmittel wie z. B. Wasser, Seifenlauge oder dergleichen in die Legezone gespritzt wird, um das Eindrücken des Dichtungsprofils in einen Einlegefalz zu erleichtern. Am vorderen Ende des Auslegearms Aa ist im Abstand parallel zur Andrückrolle A eine nicht angetriebene Zusatzrolle Zr angeordnet, die zum Eindrücken des Dichtungsendes dient.

Beim Einlegen von Dichtungsprofilen D führt der Industrieroboter, bei welchem es sich um einen sechsachsigen Gelenkroboter handelt, folgende Arbeitsgänge aus :

Abholen des Dichtungsprofils D aus der Bereitstellposition. Hierzu führt der Industrieroboter die Vorrichtung über den freistehenden Anfang des Dichtungsprofils D und klemmt es dann mit der Klemmeinheit K in der Längsführung L fest. Danach gibt die Bereitstelleinheit das Dichtungsprofil D frei.

Transport zum Anfangspunkt des Einlegefalzes,

Eindrücken des Dichtungsanfangs in den Einlegefalz und Lösen der Klemmung in der Längsführung L.

Verlegen des Dichtungsprofils D in den Einlegefalz über die Andrückrolle A. Dabei wird um Zugspannungen im Dichtungsprofil D zu vermeiden, die Andrückrolle A in Richtung des Pfeiles Pf1 angetrieben, wobei dem Dichtungsprofil D ein der Legerichtung Lr entgegengesetzter Vorschub Vs erteilt wird. Beim Verlegen besonders elastischer Dichtungsprofile D ist im Bereich der Längsführung L ein zusätzlicher Vorschub vorgesehen, der in Figur 2 durch ein strichpunktiert dargestelltes Reibrad R angedeutet ist.

Ungefähr 10 cm vor dem Ende des Einlegefalzes fährt die Vorrichtung aus und gibt das Dichtungsende frei. Die Vorrichtung wird um ca. 180° geschwenkt worauf mit der Zusatzrolle Zr das Dichtungsende eingedrückt wird.

Zum Übernehmen des Dichtungsprofils D muß dessen Anfang in der Bereitstelleinheit so angeboten werden, daß der Anfang in definierter Lage ca. 150 mm freisteht, damit die Längsführung über diesen Anfang gefügt werden kann.

Die eigentliche Bereitstellung kann entweder mit abgelängten Dichtungen, die von einer Pufferstrecke wie z. B. einem Kettenmagazin zugeführt werden oder endlos von einer Rolle erfolgen.

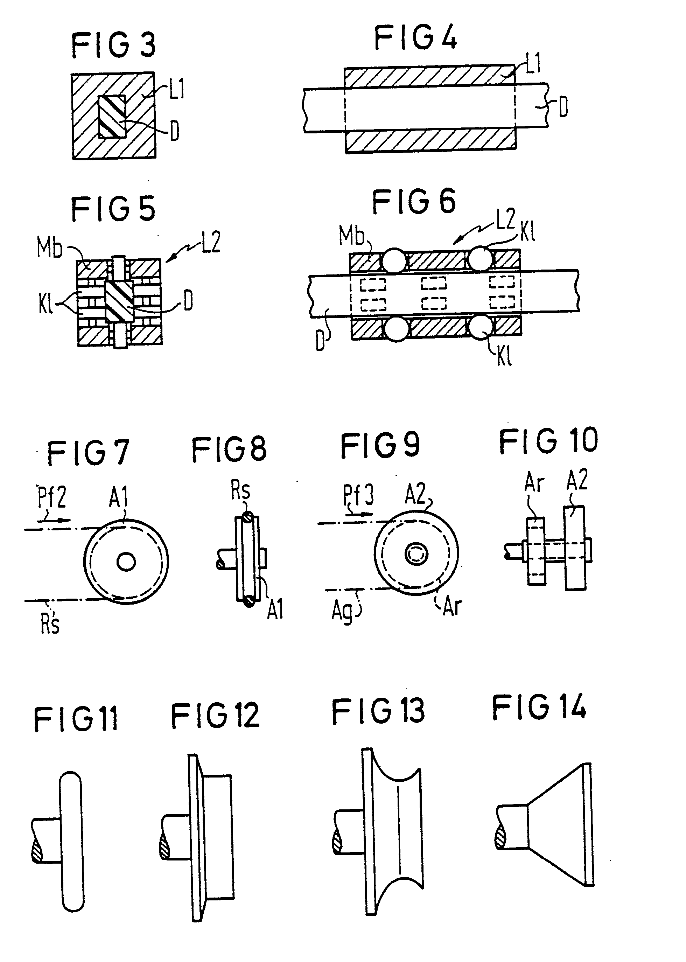

Die Figuren 3 und 4 zeigen eine Ausführungsform mit einer als Gleitführung ausgebildeten Längsführung L1. Diese Längsführung L1 ist durch einen quaderförmigen Block aus einem Kunststoff mit guten Gleiteigenschaften gebildet, in welchen ein Durchbruch entsprechend der Profilkontur des Dichtungsprofils D eingearbeitet ist.

Die Figuren 5 und 6 zeigen eine Ausführungsform mit einer als Rollenführung ausgebildeten Längsführung L2. Diese Längsführung L2 besteht aus einem Metallblock Mb mit einem Durchbruch, in dem Kugellager K2 — der Profilform des Dichtungsprofils D angepaßt angeordnet — das Dichtungsprofil D besonders reibungsarm führen.

Die Figuren 7 und 8 zeigen eine Andrückrolle Al, welche in Richtung des Pfeiles Pf2 direkt über einen Rundschnurriemen Rs angetrieben wird. Beim Eindrücken eines Dichtungsprofils D wird der Druck also zumindest teilweise mittelbar über den Rundschnurriemen Rs ausgeübt.

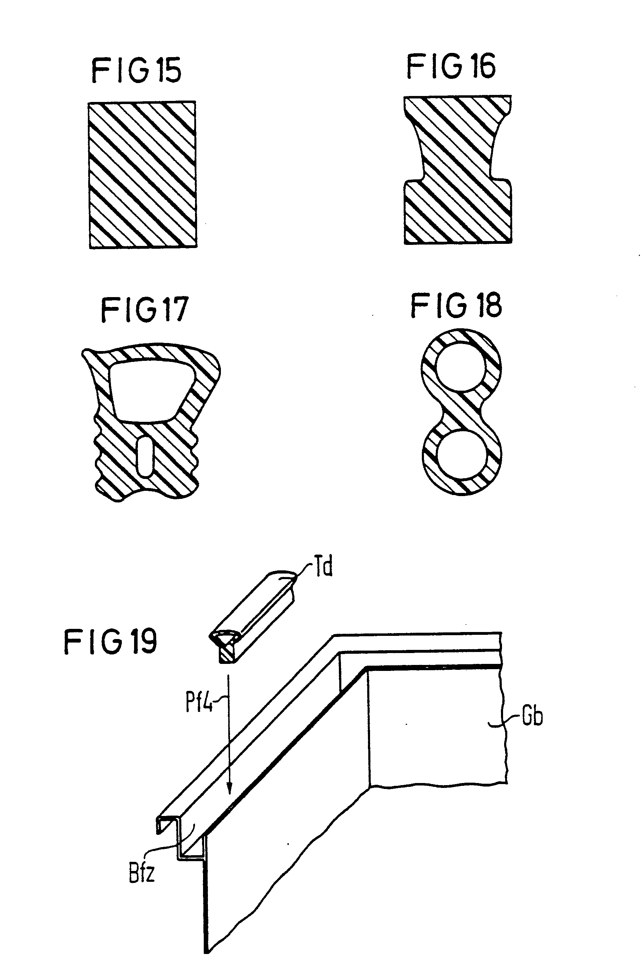

Die Figuren 9 und 10 zeigen eine Ausführungsform bei welcher eine Andrückrolle A2 über ein parallel dazu angeordnetes Antriebsrad Ar und ein endloses Antriebsglied Ag in Richtung des Pfeiles Pf3 angetrieben wird. Bei dem endlosen Antriebsglied Ag handelt es sich um eine Kette oder einen Zahnriemen. Bei der in den Figuren 9 und 10 dargestellten Ausführungsform ist es zusätzlich möglich, durch besondere Formgebung der Andrückrolle und durch Anpassung an die Profilform eines Dichtungsprofils den Eindrückvorgang zu optimieren. Ausführungsformen verschiedener Andrückrollen gehen aus den Figuren 11 bis 14 hervor, während die Figuren 15 bis 18 verschiedene Profilformen von Dichtungsprofilen zeigen. So ist beispielsweise die in Figur 12 dargestellte Andrückrolle für die in Figur 15 dargestellte Profilform geeignet. Die in den Figuren 13 und 14 dargestellten Andrückrollen können den in Figur 18 bzw. Figur 19 dargestellten Profilformen zugeordnet werden. Um den Vorschub eines Dichtungsprofils zu begünstigen können die Umfangsflächen der Andrückrollen ggf. auch die Gestalt eines Vielecks erhalten.

Figur 19 zeigt als Anwendungsbeispiel für den Einsatz einer erfindungsgemäßen Vorrichtung unter Verwendung eines Industrieroboters einen Geschirrspülerbehälter Gb, in dessen Behälterfalz Bfz eine Türdichtung Td in Richtung des Pfeiles Pf4 eingelegt werden soll.

Bezugszeichenliste

| | |
|---|---|
| A, A1, A2 | Andrückrolle |
| Aa | Auslegerarm |
| Ab | Abtriebsrad |
| Ac6 sechste Achse eines Industrieroboters | |
| Af | Anschlußflansch |
| Ag | Antriebsglied |
| Am | Antriebsmotor |
| Ar | Antriebsrad |
| At | flanschartiges Anschlußteil |
| Bfz | Behälterfalz |
| D | Dichtungsprofil |
| Gb | Geschirrspülerbehälter |
| K | Klemmeinheit |
| K1 | Kugellager |
| L, L1, L2 | Längsführung |
| Lr | Längsrichtung |
| Mb | Metallblock |
| Pf1, Pf2, Pf3, Pf4 | Pfeil |
| R | Reibrad |
| Rs | Rundschnurriemen |
| Sd | Sprühdüse |
| T | winkelförmiger Träger |
| Td | Türdichtung |
| Vs | Vorschub |
| Zr | Zusatzrolle |

**Patentansprüche**

1. Vorrichtung zum Einlegen von Dichtungsprofilen (D) mit einem programmierbaren Handhabungsgerät, insbesondere mit einem Industrieroboter, dadurch gekennzeichnet, daß das Dichtungsprofil (D) über eine der Profilform angepaße Längsführung (L ; L1 ; L2) unmittelbar unter eine im Abstand dazu angeordnete Andrückrolle (A ; A1 ; A2) führbar ist und daß die Andrückrolle (A ; A1 ; A2) derart antreibbar ist, daß beim Einlegen Zugspannungen im Dichtungsprofil (D) zumindest weitgehend kompensiert werden.

2. Vorrichtung nach Anspruch 1, dadurch gekennzeichnet, daß die Längsführung (L1) als Gleitführung ausgebildet ist.

3. Vorrichtung nach Anspruch 1, dadurch gekennzeichnet, daß die Längsführung (L2) als Rollenführung ausgebildet ist.

4. Vorrichtung nach einem der vorhergehenden Ansprüche, dadurch gekennzeichnet, daß im Bereich der Längsführung (L) ein in Richtung zur Andrückrolle (A) wirkender Vorschub für das Dichtungsprofil (D) angeordnet ist.

5. Vorrichtung nach Anspruch 4, dadurch gekennzeichnet, daß der Vorschub durch ein in der Längsführung (L) angeordnetes Reibrad (R) gebildet ist.

6. Vorrichtung nach einem der vorhergehenden Ansprüche, dadurch gekennzeichnet, daß die Andrückrolle (A) an einem mit dem Träger (T) der Längsführung (L) fest verbundenen Auslegerarm (Aa) befestigt ist.

7. Vorrichtung nach Anspruch 6, dadurch gekennzeichnet, daß der der Andrückrolle (A) zugeordnete Antriebsrmotor (Am) an dem Träger (T) befestigt ist.

8. Vorrichtung nach Anspruch 7, dadurch gekennzeichnet, daß die Andrückrolle (A1) unmittelbar über einen Rundschnurriemen antreibbar ist.

9. Vorrichtung nach Anspruch 7, dadurch gekennzeichnet, daß die Andrückrolle (A2) über ein parallel dazu angeordnetes Antriebsrad (Ar) und ein endloses Antriebsglied (Ag) antreibbar ist.

10. Vorrichtung nach Anspruch 9, dadurch gekennzeichnet, daß die Form der Andrückrolle (Figuren 11 bis 14) der Profilform (Figuren 15 bis 18) des Dichtungsprofils angepaßt ist.

11. Vorrichtung nach einem der vorhergehenden Ansprüche, dadurch gekennzeichnet, daß in der Längsführung (L) eine Klemmeinheit (K) zum Festhalten des Dichtungsprofils (D) angeordnet ist.

12. Vorrichtung nach einem der vorhergehenden Ansprüche, dadurch gekennzeichnet, daß unterhalb der Längsführung (L) eine Sprühdüse (Sd) zur Beaufschlagung des Einlegebereichs mit einem Gleitmittel angeordnet ist.

13. Vorrichtung nach einem der vorhergehenden Ansprüche, dadurch gekennzeichnet, daß im Abstand parallel zur Andrückrolle (A) eine nicht angetriebene Zusatzrolle (Zr) zum Eindrücken des Dichtungsendes angeordnet ist.

14. Vorrichtung nach Anspruch 13, dadurch gekennzeichnet, daß die Form der Zusatzrolle (Zr) der Profilform (Figuren 15 bis 18) des Dichtungsprofils angepaßt ist.

**Claims**

1. Device for inserting sealing strips (D) having a programmable handling device, in particular having an industrial robot, characterized in that the sealing strip (D) can be guided via a longitudinal guide (L ; L1 ; L2) matched to the strip form directly under a pressure roller (A ; A1 ; A2) arranged at a distance thereto and in that the pressure roller (A ; A1 ; A2) can be driven in such a manner that tensile stresses in the sealing strip (D) are compensated during insertion at least to a large extent.

2. Device according to Claim 1, characterized in that the longitudinal guide (L1) is designed as a sliding guide.

3. Device according to Claim 1, characterized in that the longitudinal guide (L2) is designed as a roll guide.

4. Device according to one of the preceding claims, characterized in that a feed for the sealing strip (D) effective in the direction of the pressure roller (A) is arranged in the region of the longitudinal guide (L).

5. Device according to Claim 4, characterized in that the feed is formed by a friction wheel (R) arranged in the longitudinal guide (L).

6. Device according to one of the preceding claims, characterized in that the pressure roller (A) is fastened to a boom arm (Aa) firmly connected to the carrier (T) of the longitudinal guide (L).

7. Device according to Claim 6, characterized in that the drive motor (Am) associated with the pressure roller (A) is fastened on the carrier (T).

8. Device according to Claim 7, characterized in that the pressure roller (A1) can be driven directly by a loop belt.

9. Device according to Claim 7, characterized in that the pressure roller (A2) can be driven by a drive wheel (Ar) arranged parallel thereto and a continuous drive member (Ag).

10. Device according to Claim 9, characterized in that the form of the pressure roller (Figures 11 to 14) is matched to the strip form (Figures 15 to 18) of the sealing strip.

11. Device according to one of the preceding claims, characterized in that a clamping unit (K) for securing the sealing strip (D) is arranged in the longitudinal guide (L).

12. Device according to one of the preceding claims, characterized in that a spray nozzle (Sd) for acting upon the insertion region with a lubricant is arranged below the longitudinal guide (L).

13. Device according to one of the preceding claims, characterized in that a non-driven additional roller (Zr) for pressing in the sealing end is arranged at a distance parallel to the pressure roller (A).

14. Device according to Claim 13, characterized in that the form of the additional roller (Zr) is matched to the strip form (Figures 15 to 18) of the sealing strip.

**Revendications**

1. Dispositif d'insertion de joints d'étanchéité profilés (D) au moyen d'un appareil de manipulation programmable, notamment au moyen d'un robot industriel, caractérisé en ce que le joint d'étanchéité profilé (D) peut être guidé par une pièce de guidage longitudinal (L ; L1 ; L2), adaptée à la forme du profilé, juste en dessous d'un galet presseur (A ; A1 ; A2) disposé à distance de celle-ci et en ce que le galet presseur (A ; A1 ; A2) peut être entraîné de manière à compenser, au moins dans une grande mesure, les efforts de traction subis par le joint d'étanchéité profilé (D) lors de l'insertion.

2. Dispositif suivant la revendication 1, caractérisé en ce que la pièce de guidage longitudinale (L1) est constituée en glissière.

3. Dispositif suivant la revendication 1, caractérisé en ce que la pièce de guidage longitudinale (L2) est constituée en pièce de guidage à galet.

4. Dispositif suivant l'une des revendications précédentes, caractérisé en ce que dans la région de la pièce de guidage longitudinale (L) est monté un dispositif d'avance du joint d'étanchéité profilé (D) agissant dans le sens allant vers le galet presseur (A).

5. Dispositif suivant la revendication 4, caractérisé en ce que le dispositif d'avance est constitué par une roue à friction (R) montée dans la pièce de guidage longitudinale (R).

6. Dispositif suivant l'une des revendications précédentes, caractérisé en ce que le galet presseur (A) est fixé à un bras extensible (Aa) relié rigidement au support (T) de la pièce de guidage longitudinale (L).

7. Dispositif suivant la revendication 6, caractérisé en ce que le moteur d'entraînement (Am), associé au galet presseur (A), est fixé au support (T).

8. Dispositif suivant la revendication 7, caractérisé en ce que le galet (A1) peut être entraîné directement par une courroie torique.

9. Dispositif suivant la revendication 7, caractérisé en ce que le galet presseur (A2) peut être entraîné par une roue d'entraînement (Ar) qui lui est parallèle et par un élément d'entraînement (Ag) sans fin.

10. Dispositif suivant la revendication 9, caractérisé en ce que la forme du galet presseur (figures 11 à 14) est adaptée à la forme profilée (figures 15 à 18) du joint d'étanchéité profilé.

11. Dispositif suivant l'une des revendications précédentes, caractérisé en ce que dans la pièce de guidage longitudinale (L) est montée une unité de blocage (K) pour maintenir le joint d'étanchéité profilé (D).

12. Dispositif suivant l'une des revendications précédentes, caractérisé en ce qu'en dessous de la pièce de guidage longitudinale (L) est disposée une buse de projection (Sd) pour alimenter la région d'insertion en agent lubrifiant.

13. Dispositif suivant l'une des revendications précédentes, caractérisé en ce qu'un galet supplémentaire (Zr), destiné à introduire par pression l'extrémité du joint d'étanchéité et qui n'est pas entraîné, est monté parallèlement au galet presseur (A) et à distance de celui-ci.

14. Dispositif suivant la revendication 13, caractérisé en ce que la forme du galet supplémentaire (Zr) est adaptée à la forme de profilé (figures 15 à 18) du joint d'étanchéité profilé.

# FIG 1

# FIG 2

FIG 3

FIG 4

FIG 5

FIG 6

FIG 7

FIG 8

FIG 9

FIG 10

FIG 11

FIG 12

FIG 13

FIG 14

0 220 429

FIG 15

FIG 16

FIG 17

FIG 18

FIG 19

Td

Pf4

Gb

Bfz

3